# EUROPEAN PATENT SPECIFICATION

(11) **EP 3 311 007 B1**
(45) Date of publication and mention of the grant of the patent: **27.01.2021**
(21) Application number: 16731851.8
(22) Date of filing: 20.06.2016
(51) Int. Cl.: F01L 1/28, F01L 3/20, F01L 3/00, F01L 3/06

(54) **INTERNAL COMBUSTION ENGINE**
BRENNKRAFTMASCHINE
MOTEUR À COMBUSTION INTERNE

(30) Priority: 22.06.2015 NL 1041374
(43) Date of publication of application: 25.04.2018
(73) Proprietor: Cereus Technology B.V., 6961 RB Eerbeek (NL)
(72) Inventor: IJSSELSTEIN, Tjeerd, Sijtse, 9651 BG Meeden (NL)
(74) Representative: Rijsdijk, Vincent
(86) International application number: PCT/EP2016/064203
(87) International publication number: WO 2016/207114

(56) References cited:
- DE-A1-102006 016 109
- US-A- 2 471 509

## Description

### BACKGROUND OF THE INVENTION

The present invention relates to a reciprocating internal combustion engine with a high fuel efficiency and a low level of emissions.

Presently, internal combustion engines of the reciprocating type, are the prime propulsion source in land and sea transportation. With the growing pressure to reduce the consumption of fossil fuels and to reduce emissions, there is a major incentive for optimization of the combustion process in internal combustion engines. The fuel efficiency of a reciprocating internal combustion engine, either operating according to the two-stroke or the four-stroke principle, highly depends on the efficiency of the combustion process. In addition, the more efficient the combustion the lower the formation of pollutants such as NOx and particulate matter (PM) will be.

It has been proposed to introduce the fuel into the combustion chambers of internal combustion engines through a rotating fuel injection device in order to obtain an homogeneous mixture of fuel and air that will result in complete and clean combustion. Such a rotating fuel injection device is disclosed in WO 2009/075572 A2, US 2471509 A and NL 2001069.

Although the rotating fuel injection device may contribute significantly to an efficiency improvement of reciprocating internal combustion engines, the intake and exhaust valve configuration of such engines remains suboptimal at best. Both the intake valves and the exhaust valves are positioned eccentric relative to the cylinder axis. The exhaust valves are positioned opposite to the intake valves. This may lead to a far from ideal flue gas flow pattern, which in turn may result in an incomplete discharge of the flue gases. Therefore, according to the prior art, it is quite common that for a certain predetermined time period the intake and exhaust valves of internal combustion engines have a time overlap in their opening, in order to:
- flush flue gases;
- overcome shortcomings in flushing due to the positioning of the valves;
- cool components;
- overcome back-pressure resistance in the exhaust system which is caused by after-treatment equipment, such as turbo-chargers, catalytic converters and soot filters and by the silencer and piping.

This, of course, goes at the expense of an engine's efficiency.

In addition, during the overlapping period of the intake and exhaust valve opening a certain volume of fresh air or fresh air-fuel mixture is directly fed into the exhaust system, which may cause a waste of fuel and undesirable release of fuel to the environment. It is not an exception that for example Otto-type engines which can be fueled by various types of combustible gases, have a spill that varies between 4% and 8%.

Another source of undesirable emissions by the present reciprocating internal combustion engines is the partial combustion of lubricating oil. This lubricating oil is used for lubrication of the engine's cylinder walls and valve stems.

### SUMMARY OF THE INVENTION

It is therefore an object of the present invention to provide an efficient and clean internal combustion engine by optimizing the combustion process and by minimizing the amount of lubricating oil that may enter the combustion chamber.

The invention provides for an engine that includes an exhaust valve configuration which increases the removal of flue gases without the need for flushing with extra air or an air-fuel mixture. Furthermore, the invention comprises an intake valve configuration that aids the creation of an homogeneous air-fuel mixture. The application of wear resistant materials such as for example ceramic or metal matrix composite materials for the wear prone components limits the need to use lubricating oil that could otherwise find its way into the combustion chamber. In summary, the internal combustion engine according to the invention comprises one or more of the following novel features:
- annular exhaust valve, whereby the annular exhaust valve can be positioned concentric with the cylinder. This enables a substantially symmetrical flow of flue gases towards and through the annular exhaust valve gap;
- annular intake valve, whereby the annular intake valve may be positioned concentric with the cylinder;
- rotatable fluid mixing device, such as an impeller, inside a combustion chamber in order to promote the formation of an homogeneous combustible mixture;
- the application of wear resistant materials for wear prone parts in order to minimize the need for lubrication and hence to minimize the amount of lubricating oil that may enter the combustion chamber.

Therefor according to a first aspect of the invention there is provided an internal combustion engine with one or more cylinders, wherein at least one cylinder:
- comprises a rotatable stand-alone impeller;
- comprises at least one annular valve; and/or
- is covered by a cylinder head comprising a cylinder head base module and a cylinder head peripherals module.

Further optional and/or advantageous embodiments are defined in the dependent claims.

### BRIEF DESCRIPTION OF THE DRAWINGS

The objects and advantages of the present invention will become more apparent from the following description when taken in conjunction with the accompanying drawings, in which:
- FIG. 1 is a schematic internal view of an embodiment of a cylinder head of the internal combustion engine according to the invention showing a built-in impeller;
- FIG. 2a is a schematic longitudinal section of the top part of a cylinder of an embodiment of the internal combustion engine according to the invention with a closed first annular valve and an opened second annular valve;
- FIG. 2b is a schematic longitudinal section of the top part of a cylinder of an embodiment of the internal combustion engine according to the invention with an opened first annular valve and a closed second annular valve;
- FIG. 3 is a schematic front view of the annular valve arrangement in a cylinder of an embodiment of the engine according to the invention, showing a few impeller blades arranged on a ring-shaped area of an impeller;
- FIG. 4 is a schematic perspective view of an assembly of the first annular valve, the second annular valve, the impeller and an impeller shaft wherein both valves are in the closed position;
- FIG. 5 is a schematic perspective view of the assembly shown in FIG. 4 wherein the second annular valve is in its opened position;
- FIG. 6 is a schematic partial longitudinal section of an embodiment of the cylinder head assembly of the internal combustion engine according to the invention;
- FIG. 7 is a schematic side view of an embodiment of the cylinder head of the internal combustion engine according to the invention.

Identical or similar parts have been designated with the same or similar reference numbers in all drawings.

### DETAILED DESCRIPTION OF THE INVENTION

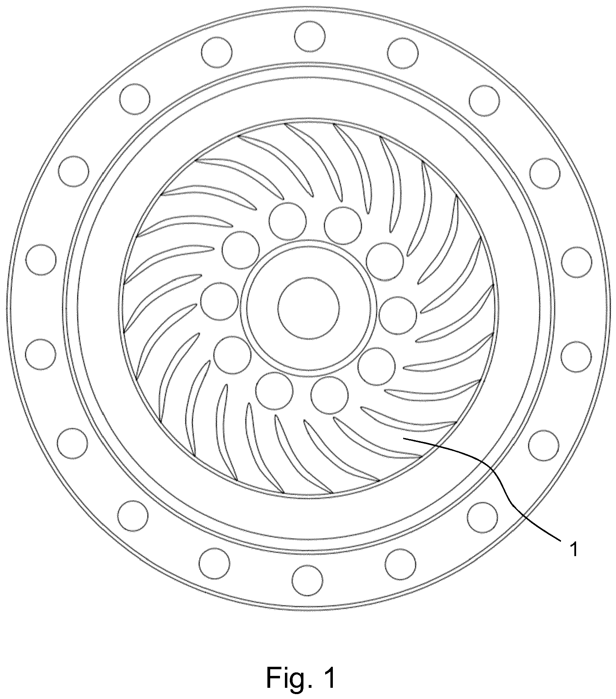

FIG. 1 is a schematic view of an embodiment of a cylinder head of the reciprocating internal combustion engine according to the invention showing a built-in impeller 1. Upon covering a cylinder with such a cylinder head the impeller 1 can rotate inside the cylinder. The use of an impeller or another type of dynamic mixing device in a combustion chamber of an internal combustion engine is known from the Dutch patent NL2001069. However, in the invention claimed by that patent the impeller is integrated in a rotating fuel injection device and is limited in size due to the valve configuration of conventional internal combustion engines. Such a device may present sealing and potential leakage challenges. Therefore, the present invention comprises the use of a stand-alone, also referred to as an autonomous, impeller or other type of mixing device in combination with static fuel injection, thus eliminating the potential complications that may arise with the application of rotating fuel injection devices. Hereinafter, any reference to the impeller 1 of the internal combustion engine according to the invention shall mean a stand-alone or autonomous impeller that is not a part of a rotating fuel injector and that can be driven to rotate separately. Depending on the size and shape of the impeller and on the rotational speed this combination of static fuel injection and a rotating impeller will be as effective as the prior art rotating fuel injector devices in creating an homogeneous mixture in the combustion chamber. In the remainder of this description and in the claims the term impeller should be construed to include any other type of suitable fluid mixing devices. Of course, the impeller according to the present invention may also be used in combination with a rotating fuel injection device.

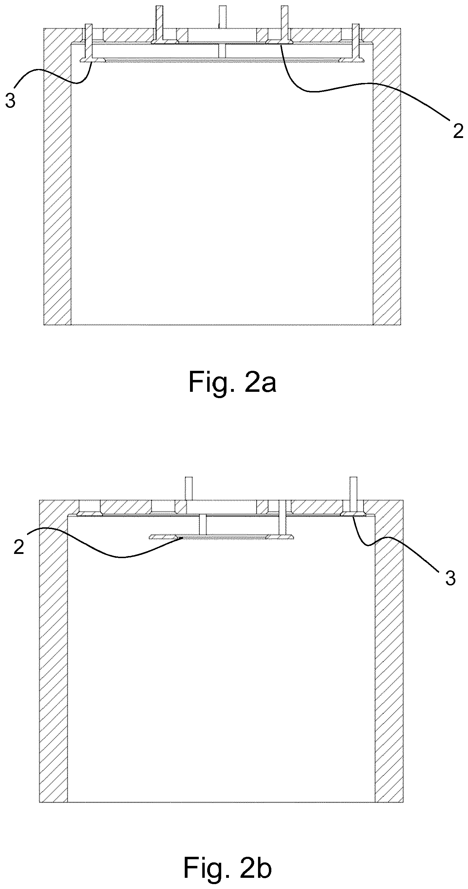

FIG. 2a shows a schematic longitudinal section of the top part of a cylinder of an embodiment of the internal combustion engine according to the invention with two annular valves, whereby a first annular valve 2 is in the closed position and a second annular valve 3 is in the opened position. The embodiments of the annular valves shown in FIG. 2a comprise a number of stems. The valves may be opened and closed by axial displacement which may be effectuated by any appropriate method, including but not limited to the use of a cam shaft, tumblers and tappets.

FIG. 2b is a schematic longitudinal section of the top part of the cylinder shown in FIG. 2a whereby the first annular valve 2 is in the opened position and the second annular valve 3 is in the closed position. It should be noted that the longitudinal section shown in FIG. 2b has a different orientation relative to the annular valves as compared to FIG. 2a. This is evident from the observable position of the stems of the annular valves.

In the embodiment shown in the schematic drawing of FIG. 2a and 2b the annular valves 2 and 3 comprise four simple stems each for actuating and/or guidance in axial displacement of the valves. Although the use of two or more stems for this purpose is one of the most simple options, the invention also covers embodiments of the annular valves in which the annular valve has a stem in the form of a cylindrical sleeve as will be shown in other drawings.

In various embodiments of the engine according to the invention which comprise two annular valves per cylinder, the smaller of the two annular valves, the first annular valve 2, will be the intake valve and the larger valve, the second annular valve 3, will be the exhaust valve, which is logical in view of the fact that the volume of the hot flue gases is larger than the volume of the intake air-fuel mixture. Nevertheless, the invention also comprises embodiments with two annular valves, whereby the valve with the larger diameter is the intake valve and the valve with the smaller diameter the exhaust valve. Also the invention comprises embodiments of the internal combustion engine with just one or more than two annular valves per cylinder.

If the annular valves of the internal combustion engine according to the invention are positioned substantially concentric with the cylinder the flow pattern of the intake gas mixture and the combustion flue gases will probably be largely rotationally symmetrical. Hence, the gases are likely to experience less resistance which contributes to a reduction of the internal energy consumption of the engine. Furthermore, the use of annular valves may easily allow up to a 25% increase in surface area of the passage for the exhaust gases as compared to the conventional poppet exhaust valve configurations. This increased passage surface and the rotational symmetrical annular shape of the exhaust valve results in a more complete discharge of the flue gases, thus reducing or even substantially eliminating the need for flushing of the cylinder with extra fresh air or an extra quantity of the air-fuel mixture. Such a flushing step costs energy and will therefore go at the expense of the efficiency of the engine. It also leads to a spill of small quantities of fresh fuel.

The inlet passage area of an annular intake valve of an engine according to the invention may easily be up to 5% larger than that of a poppet valve set of a prior art engine of the same size.

For the sake of clarifying the principle, the schematic representations shown in FIG. 2a and FIG. 2b don't show the cylinder and cylinder head as separate parts and don't show other components of the engine such as for example the fuel injector(s) or ignition source. In various embodiments of the engine according to the invention the fuel injector will be positioned substantially in the center of the annular valves. Compared to engines with poppet valves and the pertaining poppet valve layout according to the prior art, the engine according to the present invention with annular valves offers more space for a fuel injector and possible additional components associated with the fuel injector(s). Furthermore, the intake of air or an air-fuel mixture through the annular gap that is created upon the opening of the annular intake valve offers an excellent starting point for a uniform distribution of the mixture within the cylindrical combustion chamber.

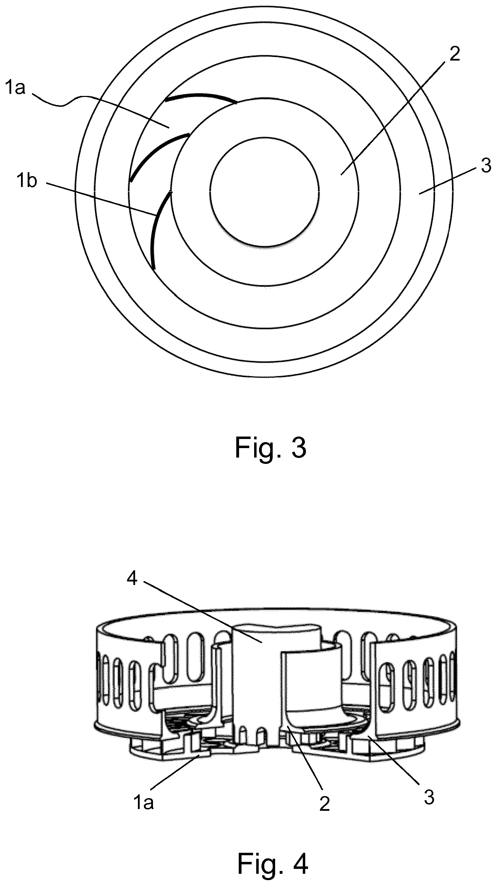

FIG. 3 is a schematic front view of the annular valve arrangement in the top of a cylinder of an embodiment of the engine according to the invention, showing a few of the impeller blades 1b arranged on a ring-shaped area of an impeller 1a, hereinafter also referred to as a ring-shaped impeller 1a, that is positioned rotatably between the first valve 2, which in this embodiment represents the intake valve, and the second valve 3, which in this embodiment represents the exhaust valve. The concentric annular valves allow the impeller to have a large outer diameter relative to the diameter of the cylinder and hence to have a substantial impact on the fluid flow pattern inside the cylinder. Upon the entrance of fresh intake gas (air) and/or an air-fuel mixture through the gap around the circumference of the opened intake valve 2, the exhaust valve 3 is closed. The intake gas and/or air-fuel mixture will be sucked into the impeller and will be distributed inside the cylinder in a vortex like flow pattern resulting in intensive mixing and homogeneity of the final mixture in the combustion chamber.

During the exhaust stroke, the intake valve 2 is closed and the exhaust valve 3 is opened. The rotating ring-shaped impeller will then suck flue gases from its suction side, the side towards the center of the ring-shaped impeller, and force them out around the outer radius of the impeller which faces the annular gap along the inner circumference of the exhaust valve 3. Hence, the impeller aids in the removal of flue gases, which contributes to the efficiency of the engine according to the invention.

The impeller 1 of an internal combustion engine according to the invention may comprise one or more of the following characteristics:
- the impeller may be construed in a way that the displacement of fluid induced by the impeller is either axial, radial, or a combination of both;
- the impeller may be construed in a way, that optimum results are obtained with respect to pressure increase across the impeller inlet and outlet;
- the impeller may be construed in a way, that optimum results are obtained with respect to induced fluid transportation across the impeller inlet and outlet;
- the impeller may be construed in a way, that optimal results are obtained with respect to a dedicated pressure increase across the impeller inlet and outlet in combination with optimal fluid transportation;
- the impeller may be construed in a way that at one (axial) side of the impeller there is a limited clearance between the impeller and the cylinder-head in order to serve as a sealing surface;
- the impeller may be construed in a way that the impeller blades may intercept injected fluid (gaseous, liquid or powder) which is than mixed with the main fluid flow across the impeller inlet and outlet;
- the impeller may be construed in a way that the injected mass of medium (gaseous, liquid, powder; either combustibles or moderators) is released within a specific compartment contained within or in a specific area of the impeller;
- the impeller may be construed in a way that both axial sides of the impeller receive equal cylinder pressure (i.e. pressure balancing) in order to avoid an axial unbalance in forces on the impeller sides caused by possible momentarily violent pressure changes within the combustion chamber;
- the impeller may be construed in a way, that the impeller blades can be operated to create a variable impeller geometry. The blades can be operated by for example an actuator or by centrifugal forces against a pre-load of a spring;
- the impeller induced flow, can be guided back into the combustion chamber in the most effective way, by installing, for example, at least one nozzle guide vane. The vane(s) can either be statically fitted or activated by one or more actuators;
- the impeller induced flow, mixing and pressurization during intake may be controlled by means of variable timing and or actuation in the movement of the intake valve;
- the impeller induced flow, mixing and pressurization may be controlled by varying rotational speed.

The action of the impeller serves three operational goals. In each of them the impeller acts in a similar way as a mechanically driven centrifugal compressor or blower. The operational goals comprise:
1. Intake of (mixed-) fluid during opening of the intake valve, which leads to pressurization, centripetal acceleration across the impeller and simultaneous swirling and downwards distribution of the fluid flow into the cylinder at the outlet side of the impeller.
2. During the period in which neither the intake valve nor the exhaust valve is activated, the rotation of the impeller leads to pressurization and centripetal acceleration across the impeller from the inlet side towards the outlet, maintaining a turbulent fluid flow within the combustion chamber. This creates simultaneous swirling and downwards distribution of the fluids, which promotes homogenization.
3. Exhaust of flue gas during the opening of the exhaust valve, leads to centripetal acceleration across the impeller from the inlet side towards the outlet, whereby simultaneous pressurization of the fluid into the exhaust duct is obtained. This leads to the fastest possible and most complete (flue-)gas exchange.

FIG. 4 is a schematic perspective view of an assembly of the first annular valve 2, the second annular valve 3 the impeller 1a and an impeller shaft 4. The positions of the annular valves as shown schematically in FIG. 4 represent the closed positions of both valves. For the sake of clarity FIG. 4 does not show the cylinder head or other suitable engine part in which the annular valves may be mounted. The embodiments of the annular valves shown in FIG. 4 each have an integrated cylindrical sleeve which also performs the function of a valve stem. The sleeve part of the exhaust valve 3 has a plurality of large perforations in order to allow flue gas that leaves the combustion chamber when the exhaust valve 3 is opened to flow through the sleeve into the exhaust system of the engine. In the embodiment of the valve and impeller assembly shown in FIG. 4 the shaft 4 of the impeller possesses a bore and outlet ports in the direct vicinity of the connection between the shaft and the impeller. The bore and ports can serve as a means to inject fuel (combustible fluids) and/or air into the combustion chamber as an alternative for or in addition to a separate fuel injector that may be installed in the combustion chamber. Using the ports of the shaft 4 for the introduction of fuel into the combustion chamber may not result in the optimal mixing of fluids in the combustion chamber since the ports, and hence the fluids, are rotating with the same speed as the impeller. Therefore, the invention also comprises the use of a stationary fuel injector or a rotating fuel injector that rotates independently from and with a different rotational speed and/or rotational direction relative to the impeller. In various embodiments the diameter of the shaft 4 and the diameter of its bore are such that a separate (stationary or rotating) fuel injector assembly can be installed inside the bore of the impeller shaft. Although the embodiment of the impeller as shown schematically in FIG. 4 comprises a base plate with a few perforations to allow gas passage, the invention comprises a plurality of applicable impeller embodiments, including impellers comprising spokes instead of a base plate.

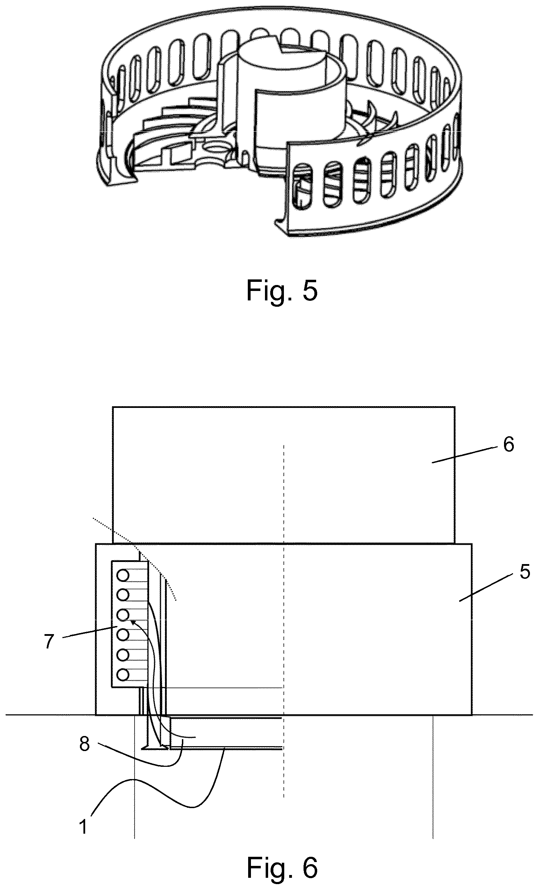

FIG. 5 is a schematic perspective view of the assembly shown in FIG. 4 wherein the second annular valve 3 is in its opened position, i.e. in the position in which flue gas from the combustion chamber is forced by the impeller through the gap along the inner circumference of the annular valve 3 and through the perforations in the sleeve of the valve into the exhaust system of the engine.

In the engine according to the invention with annular valves the annular valves can be incorporated in the engine in a substantially unlimited number of ways. In at least one embodiment of the engine the annular valves are built into a cylinder head that comprises two main elements.

FIG. 6 is a schematic partial longitudinal section of this embodiment of the cylinder head of the engine according to the invention, having a first element comprising a cylinder head base module 5 and a second element comprising a cylinder head peripherals module 6, hereinafter also referred to as CPM. The engine according to the invention may comprise a separate cylinder head for each cylinder or one or more cylinder heads for a set of two or more cylinders each. In the latter case it is possible that two or more cylinder head base modules are combined into one block, while the cylinder head peripherals modules may be separate elements for one cylinder each. In the embodiment as shown schematically in FIG. 6 static engine parts such as for example the intake and exhaust manifolds, not shown in this schematic drawing, may be connected to the cylinder head base module 5, while the peripherals, such as for example the annular valves, the fuel injector, the ring-shaped impeller, (some of) the valve actuating components, such as for example tumblers, sensors, transducers, actuators, spark plugs, glow plugs, engine break, safety equipment and connecting gear to communicate with the outside world are mounted on the cylinder head peripherals module 6.

This allows a quick and easy replacement of for example a fuel injector or valves by replacing the complete cylinder head peripherals module 6 with all the mounted peripherals as a single unit. The removed cylinder head peripherals module with the pertaining peripherals may then be overhauled for re-usage or be scrapped, depending for example on its condition.

Conventional (prior art) engines suffer from compliance deficiencies with respect to harmful emissions. Usually those engines are equipped or retrofitted with after treatment equipment, like fuel injection into the exhausting system, oxidation catalytic converters, particulate filters, urea injection, selective catalytic reduction and separation of ammonia. All those steps involve expensive investments and increased operational costs and generate a substantial amount of back-pressure between the cylinder head exit and final release into the environment. All those steps can be made redundant when engines are equipped with the CPM units according to the present invention.

The present invention provides at least the following advantages:
- CPM units can be produced in a modular approach, based on cylinder bore size rather than engine type, which offers excellent opportunities for interchangeability, simplification and uniformity;
- opportunity to lower the fuel injection pressures, which can lead to reduced wall thicknesses and, hence, reduced weight of fuel-injection components;
- reduced investments in engine components as well as exhaust systems, especially after-treatment components;
- elimination of lubrication oil spills for both the inlet and the exhaust valves;
- space and weight savings as compared to prior art internal combustion engines;
- rapid exchange of a CPM unit and/or for a quick cylinder or component inspection by removal of the modular CPM unit which is achievable in a matter of probably just 10 minutes;
- it is applicable for each type of reciprocating engine;
- it is also applicable for some turbine installations.

Certain embodiments of the engine according to the invention comprise a heat exchanger integrated in or attached to the cylinder head in order to recover heat from the exhaust gases, which heat can be used for a variety of purposes, including but not limited to for example high temperature water splitting in order to obtain hydrogen and oxygen for co-injection with the fuel as a means to increase the combustion efficiency. In a number of these embodiments the cylinder head base module 5 comprises the heat exchanger 7, hereinafter also referred to as the exhaust gas heat recovery heat exchanger 7, either as a mounted separate part or as an integral part as shown schematically in FIG. 6. The arrow 8 in FIG. 6 represents the flue gas that with the aid of the impeller 1 is forced through the passage created by the opened exhaust valve 3 into the heat exchanger 7 of the cylinder head base module 5.

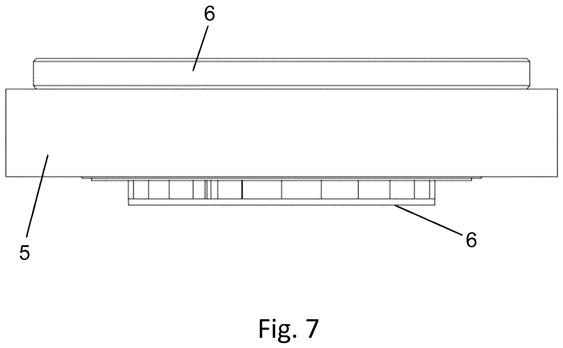

FIG. 7 is a schematic side view of an embodiment of the cylinder head of the internal combustion engine according to the invention. This side view shows the cylinder head base module 5 and the upper and lower part of the cylinder head peripherals module 6 that has been inserted in the cylinder head base module. The top flange of the cylinder head peripherals module 6 is visible at the top of the drawing and the impeller 1 of the cylinder head peripherals module that protrudes through the cylinder head base module 5 is visible at the bottom of the drawing. For the sake of the purpose of this drawing, the impeller has been marked with the reference number 6 to emphasize that the impeller that is mounted on the cylinder head peripherals module 6 is protruding through the cylinder head base module 5. Of course, this protrusion is not a necessary feature of the cylinder head according to the invention. The invention also comprises embodiments in which the impeller is located inside the bore of the cylinder head base module after the cylinder head peripherals module is mounted on the cylinder head base module.

An important, often neglected, source of emissions of particulate matter by internal combustion engines according to the prior art is lubricating oil that finds its way into the combustion chamber. Due to the physical properties of lubricating oils it will undergo only partial combustion during the combustion process in a combustion chamber of an internal combustion engine. Partial combustion of lubricating oil inevitably results in the formation of particulate matter (PM) and other undesirable compounds, such as non-methane hydrocarbons (NMHC's). Therefore, it is an object of the present invention to include measures that eliminate the need to use lubricating oils in parts of the engine from where the lubricating oil may enter the combustion chamber. The invention comprises the application of highly wear resistant materials for some of the wear prone parts that, with the use of conventional materials, would need lubrication. In this context the main relevant wear prone parts are the cylinder (or cylinder jacket), the piston rings and the valves and valve stems (or valve guide sleeves) and valve seats. By using highly wear resistant materials, either solid or in the form of a sleeve or coating, lubrication of these parts can be omitted, hence excluding lubricating oil as a source for the formation of PM and NMHC's.

Furthermore, by separating the combustion chamber compartment from the drive gear of the internal combustion engine, in a way, that none of the gasses that are displaced by the piston can enter the crankcase compartment, the lubricating oil is no longer polluted by combustion deposits. This also prevents lubricating oil from entering the combustion chamber which can lead to the formation of PM and NMHC's. In the internal combustion engine according to the invention the lubrication of piston movements is achieved by gasses and/or water vapor.

The highly wear resistant materials that may be applied may include but are not limited to for example ceramics or metal matrix composites. The use of such wear and heat resistant materials also allows higher temperatures and higher pressures in the coolant agent, which is beneficial from an efficiency point of view.

As a measure of separating the combustion compartment from the drive gear the invention includes embodiments of the internal combustion engine with a heat shield between the combustion compartment and the drive gear section, and/or an extended distance between the drive gear section and the combustion compartment, i.e. for example an extended connecting rod, and/or a flexible seal between the combustion compartment and the crankcase compartment that seals the moving connecting rod as much as possible to minimize the amount of combustion gas that may enter the crankcase compartment.

TABLE 1 below lists rough estimates of and expectations with respect to some of the characteristics of an internal combustion engine according to the invention with rotating fuel injectors according to the prior art compared to a conventional (i.e. prior art) internal combustion engine, both without and with rotating fuel injectors according to the prior art.

**TABLE 1**

| ***ESTIMATES & EXPECTATIONS*** | ***Traditional 4-valve technique*** | ***Rotating fuel Injectors according to the prior art*** | ***(Rotating) fuel Injectors with CPM*** | ***Effect on*** |
|---|---|---|---|---|
| ***Inlet valve circumference*** | *100%* | *100%* | *> 105%* | *intake resistance* |
| ***Exhaust valve circumference*** | *100%* | *100%* | *> 125%* | *- back-pressure* |
| | | | | *- efficient flushing of flue gasses* |
| ***Swirl during intake stroke*** | *partial, approx. 50%* | *partial, approx. >> 60%* | *100%* | *- homogeneous mixing of gasses* |
| | | | | *- efficient filling* |
| ***Swirl during exhaust*** | *partial, approx. 50%* | *partial, approx. >> 60%* | *100%* | *flushing of flue gasses* |
| ***Swirl during compression*** | *diminishing, max ± 10 m.s⁻¹* | *constant > 15 m.s⁻¹* | *- max* / *continuos - 100%* | *- homogeneous mixing of gasses* |
| ***Swirl during combustion*** | *diminishing to nihil* | *constant > 15 m.s⁻¹* | *- max* / *continuos - 100%* | *- homogeneous mixing of gasses* |
| ***Spill of fuel (i.e. methane)*** | *± 4% to 8% (overlap in timing)* | *± 4% to 8% (overlap in timing)* | *0%* | *- emissions* |
| | | | | *- fuel efficiency* |
| ***Specific fuel consumption*** | *100%* | *± 125 % and up* | *± 132% and up* | *Fuel economy* |
| ***Lubrication oil spill by Inlet and exhaust valves*** | *100%* | *100%* | *0%* | *Environmental (PM & NMHC's)* |
| ***Lubrication oil spill by piston and cylinder-liner*** | *100%* | *100%* | *0%* | *Environmental (PM & NMHC's)* |
| ***Time between Lubricating oil-changes*** | *100%* | *> 160 %* | *Engine Lifetime* | *Maintenance* |
| ***Soot filter required*** | *Likely* | *Not likely* | *No* | *After treatment equipment* |
| ***Catalytic converter req.*** | *Likely* | *Not likely* | *No* | *After treatment equipment* |
| ***Ammonia trap required*** | *Likely* | *Not likely* | *No* | *After treatment equipment* |

As shown in TABLE 1, several of the anticipated improvements are substantial, particularly the fuel economy improvement and spill of fuel reduction.

## Claims

1. An internal combustion engine with one or more cylinders, wherein at least one cylinder comprises a stand-alone ring-shaped impeller (1a), wherein the at least one cylinder comprises at least two annular valves (2,3) positioned substantially concentric with the cylinder, wherein the stand-alone ring-shaped impeller (1a) is positioned rotatably between the two concentric annular valves (2,3), and wherein the at least one cylinder is covered by a cylinder head in which the annular valves (2, 3) are mounted.

2. The internal combustion engine according to claim 1, wherein the cylinder head comprises a cylinder head base module (5) and a cylinder head peripherals module (6).

3. The internal combustion engine according to claim 2, wherein static engine parts are connected to the cylinder base module (5) and wherein peripherals are mounted on the cylinder head peripherals module (6), wherein the peripherals comprise the annular valves (2,3), and the ring-shaped impeller (1a).

4. The internal combustion engine according to claim 3, wherein the cylinder head peripherals module (6) further comprises a fuel injector.

5. The internal combustion engine according to any of the preceding claims 2-4, wherein the cylinder head base module (5) comprises an exhaust gas heat recovery heat exchanger.

6. The internal combustion engine according to any of the preceding claims, wherein the annular valve (2) with an outer diameter which is smaller than the inner diameter of the ring-shaped impeller is the intake valve.

7. The internal combustion engine according to any of the preceding claims, wherein the at least one cylinder comprises an ignition source.

8. The internal combustion engine according to any of the preceding claims, wherein certain wear parts inside or in the direct vicinity of the combustion chamber are made of wear resistant material.

9. The internal combustion engine according to any of the preceding claims, wherein for the at least one cylinder the engine comprises means to minimize the amount of combustion gases that may enter the crankcase compartment of the engine.

10. The internal combustion engine according to claim 9, wherein for the at least one cylinder the connection between the piston of that cylinder and the crankshaft comprises an extended connecting rod.

11. The internal combustion engine according to claim 9 or 10, wherein for the at least one cylinder the engine comprises a heat shield between the combustion compartment of that cylinder and the crankcase compartment.

12. The internal combustion engine according to any of the claims 9-11, wherein for the at least one cylinder the engine comprises a flexible seal around the connecting rod and between the combustion compartment of that cylinder and the crankcase compartment.

## Patentansprüche

1. Brennkraftmaschine mit einem oder mehr Zylindern, wobei wenigstens ein Zylinder ein unabhängiges ringförmiges Laufrad (1a) aufweist, wobei der wenigstens eine Zylinder wenigstens zwei ringförmige Ventile (2, 3) aufweist, die im Wesentlichen konzentrisch mit dem Zylinder positioniert sind, wobei das unabhängige ringförmige Laufrad (1a) drehbar zwischen den zwei konzentrischen ringförmigen Ventilen (2, 3) positioniert ist, und wobei der wenigstens eine Zylinder durch einen Zylinderkopf bedeckt ist, in dem die ringförmigen Ventile (2, 3) montiert sind.

2. Brennkraftmaschine nach Anspruch 1, wobei der Zylinderkopf ein Zylinderkopfbasismodul (5) und ein Zylinderkopfperipheriekomponentenmodul (6) aufweist.

3. Brennkraftmaschine nach Anspruch 2, wobei statische Motorteile mit dem Zylinderbasismodul (5) verbunden sind und wobei Peripheriekomponenten auf dem Zylinderkopfperipheriekomponentenmodul (6) montiert sind, wobei die Peripheriekomponenten die ringförmigen Ventile (2, 3) und das ringförmige Laufrad (1a) aufweisen.

4. Brennkraftmaschine nach Anspruch 3, wobei das Zylinderkopfperipheriekomponentenmodul (6) ferner einen Brennstoffeinspritzer aufweist.

5. Brennkraftmaschine nach einem der vorhergehenden Ansprüche 2 - 4, wobei das Zylinderkopfbasismodul (5) einen Abgaswärmerückgewinnungs-Wärmetauscher aufweist.

6. Brennkraftmaschine nach einem der vorhergehenden Ansprüche, wobei das ringförmige Ventil (2) mit einem Außendurchmesser, der kleiner als dee Innendurchmesser des ringförmigen Laufrads ist, das Einlassventil ist.

7. Brennkraftmaschine nach einem der vorhergehenden Ansprüche, wobei der wenigstens eine Zylinder eine Zündungsquelle aufweist.

8. Brennkraftmaschine nach einem der vorhergehenden Ansprüche, wobei gewisse Verschleißteile im Inneren oder in der direkten Nachbarschaft der Brennkammer aus verschleißfestem Material hergestellt sind.

9. Brennkraftmaschine nach einem der vorhergehenden Ansprüche, wobei der Motor für den wenigstens einen Zylinder Einrichtungen aufweist, um die Menge an Verbrennungsgasen, die in die Kurbelgehäusekammer des Motors eintreten können, zu minimieren.

10. Brennkraftmaschine nach Anspruch 9, wobei die Verbindung zwischen dem Kolben dieses Zylinders und der Kurbelwelle für den wenigstens einen Zylinder eine verlängerte Verbindungsstange aufweist.

11. Brennkraftmaschine nach Anspruch 9 oder 10, wobei der Motor für den wenigstens einen Zylinder eine Wärmeabschirmung zwischen der Brennkammer dieses Zylinders und der Kurbelgehäusekammer aufweist.

12. Brennkraftmaschine nach einem der Ansprüche 9 - 11, wobei der Motor für den wenigstens einen Zylinder eine flexible Dichtung um die Verbindungsstange herum und zwischen der Brennkammer dieses Zylinders und der Kurbelgehäusekammer aufweist.

## Revendications

1. Moteur à combustion interne avec un ou plusieurs cylindres, dans lequel au moins un cylindre comprend une turbine en forme d'anneau (1a) autonome, dans lequel l'au moins un cylindre comprend au moins deux soupapes annulaires (2, 3) positionnées de manière sensiblement concentrique avec le cylindre, dans lequel la turbine en forme d'anneau (1a) autonome est positionnée de manière rotative entre les deux soupapes annulaires (2,3) concentriques, et dans lequel l'au moins un cylindre est couvert par une culasse dans laquelle les soupapes annulaires (2, 3) sont montées.

2. Moteur à combustion interne selon la revendication 1, dans lequel la culasse comprend un module de base de culasse (5) et un module de pourtour de culasse (6).

3. Moteur à combustion interne selon la revendication 2, dans lequel des pièces de moteur statiques sont reliées au module de base de culasse (5) et dans lequel un pourtour est monté sur le module de pourtour de culasse (6), dans lequel le pourtour comprend les soupapes annulaires (2, 3) et la turbine en forme d'anneau (1a).

4. Moteur à combustion interne selon la revendication 3, dans lequel le module de pourtour de culasse (6) comprend en outre un injecteur de carburant.

5. Moteur à combustion interne selon l'une quelconque des revendications précédentes 2 à 4, dans lequel le module de base de culasse (5) comprend un échangeur de chaleur à récupération de chaleur de gaz d'échappement.

6. Moteur à combustion interne selon l'une quelconque des revendications précédentes, dans lequel la soupape annulaire (2), avec un diamètre extérieur qui est plus petit que le diamètre intérieur de la turbine en forme d'anneau, est la soupape d'admission.

7. Moteur à combustion interne selon l'une quelconque des revendications précédentes, dans lequel l'au moins un cylindre comprend une source d'allumage.

8. Moteur à combustion interne selon l'une quelconque des revendications précédentes, dans lequel certaines pièces d'usure à l'intérieur ou au voisinage direct de la chambre de combustion sont réalisées en un matériau résistant à l'usure.

9. Moteur à combustion interne selon l'une quelconque des revendications précédentes, dans lequel pour l'au moins un cylindre, le moteur comprend des moyens pour minimiser la quantité de gaz de combustion qui peut entrer dans le compartiment de carter du moteur.

10. Moteur à combustion interne selon la revendication 9, dans lequel, pour l'au moins un cylindre, le raccordement entre le piston de ce cylindre et le vilebrequin comprend une bielle allongée.

11. Moteur à combustion interne selon la revendication 9 ou 10, dans lequel, pour l'au moins un cylindre, le moteur comprend un bouclier thermique entre le compartiment de combustion de ce cylindre et le compartiment de carter.

12. Moteur à combustion interne selon l'une quelconque des revendications 9 à 11, dans lequel, pour l'au moins un cylindre, le moteur comprend un joint flexible autour de la bielle et entre le compartiment de combustion de ce cylindre et le compartiment de carter.
